# EUROPÄISCHE PATENTSCHRIFT

(11) **EP 2 531 556 B1**
(45) Veröffentlichungstag und Bekanntmachung des Hinweises auf die Patenterteilung: **11.12.2013**
(21) Anmeldenummer: 10760933.1
(22) Anmeldetag: 02.10.2010
(51) Int. Cl.: C08K 3/36, C08L 33/14, C08L 75/14, C09D 133/14, C09D 175/14, C09D 4/00

(54) **KRATZFESTBESCHICHTETE KUNSTSTOFFSUBSTRATE, INSBESONDERE GEHÄUSE VON ELEKTRONISCHEN GERÄTEN, MIT HOHER TRANSPARENZ, VERFAHREN ZU DEREN HERSTELLUNG UND DEREN VERWENDUNG**
PLASTIC SUBSTRATES HAVING A SCRATCH-RESISTANT COATING, IN PARTICULAR HOUSINGS OF ELECTRONIC DEVICES, HAVING HIGH TRANSPARENCY, METHOD FOR THE PRODUCTION THEREOF, AND USE THEREOF
SUBSTRAT EN PLASTIQUE REVETU D'UN REVETEMENT RESISTANT AUX RAYURES, EN PARTICULIER BOITIER D'APPAREILS ELECTRONIQUES, DOTE D'UNE TRANSPARENCE ELEVEE, SON PROCEDE DE FABRICATION ET SON UTILISATION

(30) Priorität: 04.02.2010 DE 102010006755
(43) Veröffentlichungstag der Anmeldung: 12.12.2012
(73) Patentinhaber: BASF Coatings GmbH, 48165 Münster (DE)
(72) Erfinder: KUES, Jan Bernd, 48155 Muenster (DE); BROSSEIT, Andre, 59077 Hamm (DE); HOMANN, Karin, 48565 Steinfurt (DE); SCHROEDER, Stefanie, 48249 Duelmen (DE)
(86) Internationale Anmeldenummer: PCT/EP2010/006028
(87) Internationale Veröffentlichungsnummer: WO 2011/095186

(56) Entgegenhaltungen:
- WO-A1-2009/049000
- US-A1- 2002 111 390

## Beschreibung

Die vorliegende Erfindung betrifft ein Verfahren zur Beschichtung von Kunststoffsubstraten, insbesondere von Gehäusen von elektronischen Geräten, bei dem ein transparentes Beschichtungsmittel umfassend mindestens ein strahlenhärtbares Urethan(meth)acrylat (A), Nanopartikel (B), Reaktiwerdünner (C) und ggf. Lösemittel auf das Kunststoffsubstrat appliziert wird, sowie die durch das Verfahren erhältlichen beschichteten Substrate.

Aus der WO 09/049000 ist bereits ein Verfahren der eingangs genannten Art bekannt, bei dem strahlenhärtbare Beschichtungsmittel eingesetzt werden, die neben >10 bis < 40 Gew.-% Nanopartikel (B), bezogen auf das Gesamtgewicht der filmbildenden Bestandteile (A) und (C), 10 bis 60 Gew.-% mindestens eines Bindemittels (A) und 40 bis 90 Gew.-% mindestens eines Reaktiwerdünners (C) enthalten, wobei die Summe der Gewichtsanteile der filmbildenden Bestandteile (A) und (C) jeweils 100 Gew.-% beträgt. Die resultierenden Beschichtungen zeichnen sich durch eine gute Abrasionsbeständigkeit und sehr gute optische Eigenschaften, d.h. einen geringen Haze-Wert der unbelasteten Beschichtung kleiner als 1 aus. Dies wird gemäß WO09/049000 dadurch gewährleistet, dass als Bindemittel (A) Urethan(meth)acrylate mit 2 Doppelbindungen pro Molekül und als Reaktiwerdünner (C) hochfunktionelle Reaktiwerdünner mit bevorzugt 3 bis 6 Doppelbindungen pro Molekül eingesetzt werden. Werden dagegen hexafunktionelle Urethan(meth)acrylate und difunktionelle Reaktiwerdünner, wie Hexandioldiacrylat, oder nur tri- und pentafunktionelle Reaktiwerdünner eingesetzt, so werden die geforderten sehr niedrigen Haze-Werte nicht erreicht.

Weiterhin sind aus der EP-B-1 704 189 strahlenhärtbare Beschichtungsmittel für die Beschichtung von Kunststoffsubstraten, insbesondere von Polycarbonatsubstraten, bekannt, die neben Nanopartikeln (B) mindestens zwei verschiedene polyfunktionelle (meth)acrylat-funktionelle Verbindungen, insbesondere eine Mischung aus einem hexafunktionelle Urethanacrylat und mindestens einer Verbindung, ausgewählt aus der Gruppe Butandioldiacrylat, Trimethylolpropantriacrylat und Pentaerythritoltriacrylat, enthalten. Durch diese Kombination von zwei verschiedenen polyfunktionellen (meth)acrylat-funktionellen Verbindungen wird die Abrasionsbeständigkeit der resultierenden gehärteten Beschichtung im Vergleich zu gehärteten Beschichtungen auf Basis nur jeweils einer polyfunktionellen (meth)-acrylatfunktionellen Verbindung verbessert. Angaben zu den optischen Eigenschaften der resultierenden Beschichtungen und zu dem Einfluss der filmbildenden Komponenten auf die optischen Eigenschaften fehlen jedoch in dieser Schrift.

Ferner sind auch aus dem Konferenzbericht "RadTech 2000" vom 9. - 12. April 2000, Baltimore, Seiten 822 - 831, strahlenhärtbare Beschichtungsmittel für die Beschichtung von Kunststoffsubstraten, insbesondere von Polycarbonatsubstraten, bekannt, die neben Nanopartikeln (B) mindestens zwei verschiedene polyfunktionelle (meth)acrylatfunktionelle Verbindungen, insbesondere eine Mischung aus einem hexafunktionellen Urethanacrylat und mindestens einer Verbindung, ausgewählt aus der Gruppe Hexandioldiacrylat, Tripropylenglykoldiacrylat und ethoxyliertes Trimethylolpropantriacrylat, enthalten.

Außerdem sind aus der US 6,420,451 strahlenhärtbare Beschichtungsmittel, insbesondere für die Beschichtung von Brillengläsern, bekannt, die (a) 20 bis 80 % eines ersten aliphatischen Urethanacrylates, insbesondere eines Urethanacrylates mit im Mittel 2 Doppelbindungen pro Molekül, (b) 5 bis 50 % einer Verbindung mit einer Acrylatgruppe pro Molekül, (c) (i) 2 bis 30 % eines zweiten aliphatischen Urethanacrylates, insbesondere eines Urethanacrylates mit im Mittel 6 Doppelbindungen pro Molekül, oder (ii) 2 bis 25 % einer multifunktionalen Acrylatverbindung oder (iii) einer Kombination von (i) und (ii) und (d) 1 bis 30 % Nanopartikel enthalten.

Die EP-B-668 330 beschreibt strahlenhärtbare Beschichtungsmittel für die Beschichtung von Polycarbonatsubstraten, die 20 bis 75 Gew.-%, mindestens eines, im wesentlichen Hydroxyl- und Isocyanatgruppen-freien, aliphatischen Urethanacrylates (A) auf Basis niedrig-viskoser isocyanuratgruppenhaltiger Polyisocyanate, 5 bis 80 Gew.-% einer niedrig-viskosen Acrylesterkomponente (C), die zu mindestens 80 Gew.-% aus einer bisfunktionellen Acrylsäureester-Komponente und bis zu 20 Gew.-% aus einer anderen Acrylsäureester-Komponente besteht, und 0 bis 80 Gew.-% eines Lösemittels oder eines Lösemittelgemisches, wobei die Gewichtsprozentangaben der Komponenten (A), (C) und (LM) jeweils bezogen sind auf das Gesamtgewicht der Komponenten (A), (C) und (LM). Der Zusatz von Nanopartikeln zu den Beschichtungsmitteln ist in dieser Schrift jedoch nicht beschrieben. Außerdem fehlen in dieser Schrift Angaben zu den optischen Eigenschaften der resultierenden Beschichtungen und zu dem Einfluss der filmbildenden Komponenten auf die optischen Eigenschaften.

Schließlich sind aus der US 4, 455, 205 strahlenhärtbare Beschichtungsmittel bekannt, die mindestens zwei verschiedene polyfunktionelle (meth)acrylatfunktionelle Verbindungen, insbesondere eine Mischung aus Hexandioldiacrylat und Trimethylolpropantriacrylat, und das Hydrolyseprodukt von silylfunktionellen Acrylaten und kolloidalem Siliciumdioxid enthalten. Die Verwendung von Urethan(meth)-acrylaten in den Beschichtungsmitteln ist jedoch nicht beschrieben.

### Aufgabe

Der vorliegenden Erfindung lag somit die Aufgabe zugrunde, ein Verfahren zur Beschichtung von Kunststoffsubstraten, insbesondere von Gehäusen von elektronischen Geräten, zur Verfügung zu stellen, bei dem die resultierenden beschichteten Substrate eine sehr hohe Kratzfestigkeit bei gleichzeitig sehr hoher Transparenz und geringem Grauschleier (Haze-Werte der unbelasteten Beschichtung kleiner als 1, bevorzugt kleiner als 0,8, jeweils bestimmt mit Hilfe des BYK-Gardner Gerätes Haze-gard plus C4725) aufweisen.

Ferner sollten die Beschichtungsmittel nach Applikation auf den Kunststoffsubstraten, insbesondere auf Polymethylmethacrylaten, Polycarbonaten und/oder Blends von Polycarbonat und anderen Kunststoffen, zu keiner Anquellung der Substrate führen.

Darüber hinaus sollten die Beschichtungsmittel zu gehärteten Beschichtungen mit einer sehr guten Haftung (insbesondere bestimmt mittels Klebebandabriss gemäß ASTM D 3359 und ISO 2409) auf Kunststoffen, insbesondere auf Polymethylmethacrylaten, Polycarbonaten und/oder Blends von Polycarbonat und anderen Kunststoffen, führen.

Schließlich sollten die gehärteten Beschichtungen eine hohe Widerstandsfähigkeit bei schlagartiger Verformung (Schlagprüfung) aufweisen, die in Anlehnung an die Norm DIN EN ISO 6272-1 DE bestimmt wurde.

### Lösung der Aufgabe

Im Lichte der obengenannten Aufgabenstellung wurde ein Verfahren zur Beschichtung von Kunststoffsubstraten gefunden, bei dem ein transparentes Beschichtungsmittel umfassend mindestens ein strahlenhärtbares Urethan(meth)acrylat (A), Nanopartikel (B), Reaktiwerdünner (C) und ggf. Lösemittel, auf das Kunststoffsubstrat appliziert wird, das dadurch gekennzeichnet ist, dass das Beschichtungsmittel
(i) 30 bis 60 Gew.-%, bezogen auf das Gesamtgewicht der Komponenten (A1), (A2), (A3), (B), (C1), (C2) und (C3), der Nanopartikel (B),
(ii) 15 bis 40 Gew.-%, bezogen auf das Gesamtgewicht der filmbildenden Komponenten (A1), (A2), (A3), (C1), (C2) und (C3), eines oder mehrerer Urethan(meth)acrylate (A1) mit im Mittel 3 bis 5 Acrylat- und/oder Methacrylatgruppen pro Molekül,
(iii) 0 bis weniger als 10 Gew.-%, bezogen auf das Gesamtgewicht der filmbildenden Komponenten (A1), (A2), (A3), (C1), (C2) und (C3), eines oder mehrerer Urethan(meth)acrylate (A2) mit im Mittel mehr als 5 Acrylat- und/oder Methacrylatgruppen pro Molekül,
(iv) 0 bis weniger als 10 Gew.-%, bezogen auf das Gesamtgewicht der filmbildenden Komponenten (A1), (A2), (A3), (C1), (C2) und (C3), eines oder mehrerer Urethan(meth)acrylate (A3) mit im Mittel weniger als 3 Acrylat- und/oder Methacrylatgruppen pro Molekül,
(v) 55 bis 80 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C1) mit 4 Acrylat- und/oder Methacrylatgruppen pro Molekül,
(vi) 0 bis 15 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C2) mit 2 Acrylat- und/oder Methacrylatgruppen pro Molekül und
(vii) 0 bis 15 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C3) mit 3 Acrylat- und/oder Methacrylatgruppen pro Molekül enthält, wobei die Summe der Gewichtsanteile der filmbildenden Komponenten (A1), (A2), (A3), (C1), (C2) und (C3) jeweils 100 Gew.-% beträgt.

Gegenstand der vorliegenden Erfindung sind außerdem die durch das Verfahren erhältlichen beschichteten Polycarbonatsubstrate sowie deren Verwendung.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Verfahrens gelöst werden konnten.

So ist es insbesondere überraschend, dass durch die erfindungsgemäß eingesetzte Kombination spezieller Urethanacrylate mit tetrafunktionellen (Meth)Acrylsäureestern, ggf. in Kombination mit difunktionellen (Meth)Acrylsäureestern und/oder trifunktionellen (Meth)-Acrylsäureestern, Beschichtungen mit einer sehr hohen Kratzfestigkeit bei gleichzeitig sehr hoher Transparenz und geringem Grauschleier (Haze-Werte der unbelasteten Beschichtung kleiner als 1, bevorzugt kleiner als 0,8, jeweils bestimmt mit Hilfe des BYK-Gardner Gerätes Haze-gard plus C4725) erhalten werden.

Ferner führen die Beschichtungsmittel nach Applikation auf den Kunststoffsubstraten, insbesondere auf Polymethylmethacrylaten, Polycarbonaten und/oder Blends von Polycarbonat und anderen Kunststoffen, zu keiner Anquellung der Substrate.

Darüber hinaus führen die Beschichtungsmittel zu gehärteten Beschichtungen mit einer sehr guten Haftung (insbesondere bestimmt mittels Klebebandabriss gemäß ASTM D 3359 und ISO 2409) auf Kunststoffen, insbesondere auf Polymethylmethacrylaten, Polycarbonaten und/oder Blends von Polycarbonat und anderen Kunststoffen.

Schließlich weisen die gehärteten Beschichtungen eine hohe Widerstandsfähigkeit bei schlagartiger Verformung (Schlagprüfung) auf, die in Anlehnung an die Norm DIN EN ISO 6272-1 DE bestimmt wurde.

### Ausführliche Beschreibung der Erfindung Erfindungsgemäß eingesetztes Beschichtungsmittel Das strahlenhärtbare Bindemittel (A)

Es ist erfindungswesentlich, dass die in dem erfindungsgemäßen Verfahren eingesetzten Beschichtungsmittel als strahlenhärtbares Bindemittel (A) ein oder mehrere Urethan(meth)acrylate (A1) mit im Mittel 3 bis 5 Acrylat- und/oder Methacrylatgruppen pro Molekül, ggf. in Kombination mit Urethanacrylaten (A2) mit im Mittel mehr als 5 Acrylat- und/oder Methacrylatgruppen pro Molekül und/oder Urethanacrylaten (A3) mit im Mittel weniger als 3 Acrylat- und/oder Methacrylatgruppen pro Molekül enthalten. Durch diese spezielle Auswahl der strahlenhärtbaren Bindemittel in Kombination mit den tetrafunktionellen (Meth)Acrylsäureestern (C1), ggf. in Kombination mit difunktionellen (Meth)Acrylsäureestern (C2) und/oder trifunktionellen (Meth)Acrylsäureestern (C3), werden Beschichtungen mit einer sehr hohen Kratzfestigkeit bei gleichzeitig sehr hoher Transparenz und geringem Grauschleier (Haze-Werte der unbelasteten Beschichtung kleiner als 1, bevorzugt kleiner als 0,8, jeweils bestimmt mit Hilfe des BYK-Gardner Gerätes Haze-gard plus C4725) erhalten.

Bevorzugt werden als strahlenhärtbares Bindemittel (A) ein oder mehrere Urethan(meth)acrylate (A1) mit im Mittel 3 bis 4 Acrylat- und/oder Methacrylatgruppen pro Molekül eingesetzt.

Prinzipiell sind alle Urethan(meth)acrylate (A1) mit der geforderten Anzahl an Acrylat- und/oder Methacrylatgruppen geeignet. Während für UV-Härtende Systeme Acrylat-Gruppen bevorzugte Gruppen sind, werden Methacrylate häufig über Elektronenstrahlung gehärtet. Es können aber auch Urethan(meth)acrylate mit sowohl Acrylat- als auch Methacrylatgruppen eingesetzt werden.

Bevorzugt werden als strahlenhärtbares Bindemittel (A) ein oder mehrere Urethanacrylate (A1) mit im Mittel 3 bis 5, insbesondere 3 bis 4, Acrylatgruppen pro Molekül eingesetzt. Insbesondere werden aliphatische Urethanacrylate (A1) eingesetzt.

Die als Komponente (A1) eingesetzten Urethan(meth)acrylate können in dem Fachmann bekannter Weise dadurch hergestellt werden, dass
(a1) Hydroxyalkylacrylate und/oder Hydroxyalkylmethacrylate, bevorzugt Hydroxyalkylacrylate und/oder Hydroxyalkylmethacrylate mit 2 bis 4 C-Atomen im Alkylrest, ggf. in Abmischung von 0 bis 50 Hydroxyäquivalent-%, bevorzugt mit 0 bis 30 Hydroxyäquivalent-%, jeweils bezogen auf die Gesamtmenge der Komponente (a1), an anderen hydroxylgruppenhaltigen Verbindungen
   mit
(a2) einem oder mehreren Polyisocyanaten mit im Mittel mindestens 3 Isocyanatgruppen pro Molekül
   umgesetzt werden.

Bei den Hydroxyalkylacrylaten und/oder Hydroxyalkylmethacrylaten der Komponente (a1) handelt es sich um bekannte Hydroxyalkylester der Acryl- und Methacrylsäure. Bevorzugt werden Hydroxyalkylacrylate und/oder Hydroxyalkylmethacrylate mit 2 bis 4 C-Atomen im Alkylrest eingesetzt, wie beispielsweise Hydroxyethylmethacrylat, Hydroxyethylacrylat, Hydroxypropylacrylat, Hydroxypropylmethacrylat, Hydroxybutylacrylat und Hydroxybutylmethacrylat, wobei bevorzugt Hydroxyethylacrylat eingesetzt wird.

Zusammen mit den Hydroxyalkylacrylaten und/oder Hydroxyalkylmethacrylaten können ggf. noch andere hydroxylgruppenhaltige Verbindungen eingesetzt werden, wobei aber als Komponente (a1) bevorzugt nur Hydroxyalkylacrylate und/oder Hydroxyalkylmethacrylate eingesetzt werden.

Geeignete andere hydroxylgruppenhaltige Verbindungen sind insbesondere ein- bis dreiwertige aliphatische niedermolekulare Alkohole, bevorzugt mit 1 bis 20 C-Atomen, wie beispielsweise Methanol, Ethanol, n-Hexanol, Isooctanol, Isododecanol, Benzylalkohol, Ethylenglykol, Diethylenglykol, Propylenglykol, Glycerin oder aus diesen Alkoholen durch Alkoxylierung erhaltene Alkohole.

Bei der Komponente (a2) handelt es sich um ein oder mehrere Polyisocyanate mit im Mittel mindestens 3 Isocyanatgruppen pro Molekül, insbesondere aliphatische Polyisocyanate mit im Mittel mindestens 3 Isocyanatgruppen pro Molekül. Bevorzugt werden aliphatische Polyisocyanate mit im Mittel 3 bis 4 Isocyanatgruppen pro Molekül eingesetzt.

Besonders bevorzugt werden als Komponente (A1) aliphatische Urethanacrylate auf Basis von Isocyanuraten von aliphatischen Diisocyanaten, ganz besonders bevorzugt aliphatische Urethanacrylate auf Basis von Isocyanuraten von Hexamethylendiisocyanat, eingesetzt. Diese Urethanacrylate sind üblicherweise erhältlich durch Umsetzung der Komponente (a1) mit Isocyanuraten von aliphatischen Diisocyanaten als Komponente (a2), insbesondere mit dem Isocyanurat von Hexamethylendiisocyanat als Komponente (a2).

Die Herstellung der Urethan(meth)acrylate (A1) erfolgt im Allgemeinen durch Umsetzung der Komponenten (a1) und (a2) nach bekannten Methoden, ggf. unter Mitverwendung von geeigneten Urethanisierungskatalysatoren. Bevorzugt werden dabei die Komponenten (a1) und (a2) unter Einhaltung eines NCO/OH-Äquivalent-verhältnisses von 0,9 : 1 bis 1,1 : 1, bevorzugt von ca. 1 : 1, umgesetzt. Hierdurch weisen die erhaltenen Urethan(meth)acrylate im Wesentlichen keine freien Hydroxylgruppen und im Wesentlichen keine freien Isocyanatgruppen mehr auf.

Geeignete Katalysatoren für die Umsetzung sind z.B. Zinn(II)octoat, Dibutylzinndilaurat oder tertiäre Amine, wie Dimethylbenzylamin. Die Umsetzung kann in Substanz oder auch in Gegenwart der Reaktivverdünner (C1), (C2) und/oder (C3) oder in Gegenwart von Lösemittel (LM) erfolgen, sofern diese Komponenten keine mit Isocyanatgruppen reaktiven Wasserstoffatome aufweisen.

Als aliphatisches Urethan(meth)acrylat (A1) können beispielsweise auch die im Handel erhältlichen Produkte Sartomer CN 925 (aliphatisches Urethantetraacrylat) und Sartomer CN 9276 (aliphatisches Urethantetraacrylat) der Firma Sartomer sowie das aliphatische Urethanacrylat Desmolux ® VP LS 2308 der Firma Bayer Material Science eingesetzt werden.

Als Komponente (A1) können insbesondere auch die in der EP-B-668 330 auf Seite 2, Zeile 41, bis Seite 3, Zeile 49 und das im Beispiel 1 der EP-B-668 330 beschriebene Urethanacrylat eingesetzt werden. Ein dermaßen bevorzugt eingesetztes Urethanacrylat ist beispielsweise auch das im Handel erhältliche Urethanacrylat Desmolux ® VP LS 2308 der Firma Bayer Material Science.

Gegebenfalls können zusammen mit dem Urethan(meth)acrylat (A1) noch geringe Mengen von jeweils weniger als 10 Gew.-%, bezogen auf das Gesamtgewicht der filmbildenden Komponenten, eines oder mehrerer Urethan(meth)acrylate (A3) mit im Mittel weniger als 3 Acrylat- und/oder Methacrylatgruppen pro Molekül und/oder eines oder mehrerer Urethan(meth)acrylate (A2) mit im Mittel mehr als 5 Acrylat- und/oder Methacrylatgruppen pro Molekül eingesetzt werden. Besonders bevorzugt werden als strahlenhärtbares Bindemittel (A) aber ausschließlich ein oder mehrere Urethan(meth)acrylate (A1) mit im Mittel 3 bis 5 Acrylat- und/oder Meth-acrylatgruppen pro Molekül eingesetzt.

Die als Komponente (A2) und (A3) eingesetzten Urethan(meth)acrylate können analog zu den Urethan(meth)acrylaten (A1) in dem Fachmann bekannter Weise dadurch hergestellt werden, dass Hydroxyalkylacrylate und/oder Hydroxyalkylmethacrylate, bevorzugt Hydroxyalkylacrylate und/oder Hydroxyalkylmethacrylate mit 2 bis 4 C-Atomen im Alkylrest, ggf. in Abmischung mit anderen hydroxylgruppenhaltigen Verbindungen, mit einem oder mehreren Polyisocyanaten mit im Mittel mindestens 2 Isocyanatgruppen pro Molekül umgesetzt werden. Bevorzugt werden als Komponenten (A2) bzw. (A3) aliphatische Urethanacrylate eingesetzt.

### Die Nanopartikel (B)

Als Nanopartikel (B) sind insbesondere oxidische anorganische Nanopartikel einer mittleren Teilchengröße von 1 bis 500 nm, vorzugsweise 3 bis 100 nm, besonders bevorzugt 5 bis 50 nm und ganz besonders bevorzugt 5 bis 30 nm geeignet. Naturgemäß besitzen Nanopartikel jedoch eine mittlere Teilchengröße im Nanometerbereich, wodurch sich diese von Teilchen einer mittleren Teilchengröße im Mikrometerbereich (beispielsweise 1 µm und mehr) abgrenzen. Unter "oxidisch anorganisch" wird verstanden, dass es sich hierbei im Wesentlichen um Nanopartikel aus einem Metalloxid, wie Aluminiumoxid oder einem Halbmetalloxid, wie Siliciumdioxid handelt. Letztere können beispielsweise aus wässrigen Alkalisilikatlösungen durch Ansäuern und anschließender Trocknung erhalten werden. Auch können sogenannte pyrogene Kieselsäuren, die durch Flammenhydrolyse von Siliciumhalogenverbindungen erhalten werden, eingesetzt werden. Weiterhin ist es möglich, organofunktionelle Silane zu hydrolysieren und kondensieren, wobei wässrige oder wässrig alkoholische Kieselsäuresole entstehen. Diesen kann beispielsweise durch azeotrope Destillation der Wassergehalt entzogen werden. Die Bestimmung der mittleren Teilchengröße erfolgt vorzugsweise mittels dynamischer Lichtstreumessungen (ALV-Goniometer, Messwinkel 90°, Temperatur 23°C), wobei die Auswertung der Ergebnisse nach der Cumulant-Methode erfolgt.

Besonders bevorzugt sind jedoch Nanopartikel, deren Oberfläche mit ankondensierten Verbindungen modifiziert ist. Eine Oberflächenmodifizierung erfolgt üblicherweise durch Anbindung der an der Nanopartikeloberfläche befindlichen Gruppen, wie beispielsweise Hydroxylgruppen, an monomere oder oligomere Verbindungen. Diese monomeren oder oligomeren Verbindungen enthalten daher zumindest eine gegenüber den an der Nanopartikeloberfläche befindlichen Gruppen affine Gruppe. Die Anbindung kann beispielswiese durch kovalente Bindung, ionische Anbindung oder Physisorption erfolgen. Der nicht zur Anbindung an die Nanopartikeloberfläche benötigte Teil der monomeren oder oligomeren Verbindungen ragt vorzugsweise ganz oder teilweise in das die Nanopartikel umgebende Medium und trägt vorzugsweise zur Verbesserung der Verträglichkeit zwischen Nanopartikeln einerseits und den Komponenten (A) und/oder (C) andererseits bei. Derartige Nanopartikel werden bevorzugt verwendet.

Die zur Oberflächenmodifizierung verwendeten monomeren oder oligomeren Verbindungen können neben der zur Anbindung an die Oberfläche der Nanopartikel erforderlichen Gruppe auch weitere funktionelle Gruppen enthalten, die beispielsweise in der Lage sind mit der Bindemittelkomponente (A) zu reagieren. Eine derartige Oberflächenmodifikation gelingt beispielsweise durch Zugabe hydrolysierbarer Silane, die ethylenisch ungesättigte Gruppen tragen, zu den oxidischen Nanopartikeln, vorzugsweise Kieselsäuren bzw. SiO2-Solen oder SiO2-Sol-Gelen.

Die Oberflächenmodifikation oxidischer anorganischer Silica-Nanopartikel kann durch Ankondensieren der Silane an die Nanopartikeloberfläche erfolgen. Die Herstellung der Nanopartikel kann dabei so erfolgen, dass ausgehend von einer Alkalisilikatlösung eine Kondensation derselben unter Einfluss eines sauren Ionenaustauschers oder einer Säure bis zur gewünschten Teilchengröße herbeigeführt wird und dann gegebenenfalls nach Stabilisierung der Teilchen die Silane zugegeben werden, worauf diese (teil)hydrolysieren und an die Oberfläche der Teilchen ankondensieren. Dem resultierenden Sol werden gegebenenfalls unter Vakuum, durch (azeotrope) Destillation die wässrigen Bestandteile entzogen.

Käuflich erhältlich sind oberflächenmodifizierte Silica-Nanopartikel beispielsweise von der Firma Byk unter der Bezeichnung Nanobyk oder der Firma Nano Resins AG aus Geesthacht, Deutschland unter der Bezeichnung Nanopol®.

Die Nanopartikel (B) werden vorzugsweise in Lösungsmitteln dispergiert eingesetzt.

### Der verwendete Reaktiwerdünner (C)

Es ist erfindungswesentlich, dass das in dem Verfahren eingesetzte Beschichtungsmittel als Reaktiwerdünner (C1) ein oder mehrere, von der Komponente (A) verschiedene, monomere und/oder oligomere Verbindungen (C1) mit 4 Acrylat- und/oder Methacrylatgruppen pro Molekül enthält. Insbesondere werden als Komponente (C1) die Ester der Acryl- und/oder Methacrylsäure, bevorzugt die Ester der Acrylsäure, mit tetrafunktionellen Alkoholen eingesetzt.

Beispiele für geeignete Reaktiwerdünner (C1) sind Pentaerythritoltetraacrylat, Ditrimethylolpropantetraacrylat, ethoxyliertes Pentaerythritoltetraacrylat, propoxyliertes Pentaerythritoltetraacrylat und Mischungen der genannten tetrafunktionellen Reaktivverdünner. Bevorzugt wird als Komponente (C1) Pentaerythritoltetraacrylat und/- oder Ditrimethylolpropantetraacrylat eingesetzt.

Als Reaktiwerdünner (C2) werden ein oder mehrere, von der Komponente (A) verschiedene, monomere und/oder oligomere Verbindungen (C2) mit 2 Acrylat- und/oder Methacrylatgruppen pro Molekül eingesetzt. Insbesondere werden als Komponente (C2) die Ester der Acryl- und/oder Methacrylsäure, bevorzugt die Ester der Acrylsäure, mit difunktionellen Alkoholen eingesetzt.

Beispiele für geeignete Reaktiwerdünner (C2) sind Butandioldiacrylat, Hexandioldiacrylat, Dipropylenglykoldiacrylat, Tripropylenglykoldiacrylat und Mischungen der genannten difunktionellen Reaktivverdünner. Bevorzugt wird Hexandioldiacrylat als Komponente (C2) eingesetzt.

Als Reaktiwerdünner (C3) werden ein oder mehrere, von der Komponente (A) verschiedene, monomere und/oder oligomere Verbindungen (C3) mit 3 Acrylat- und/oder Methacrylatgruppen pro Molekül eingesetzt. Insbesondere werden als Komponente (C3) die Ester der Acryl- und/oder Methacrylsäure, bevorzugt die Ester der Acrylsäure, mit trifunktionellen Alkoholen eingesetzt.

Beispiele für geeignete Reaktiwerdünner (C3) sind Trimethylolpropantriacrylat, propoxyliertes Glycerintriacrylat, propoxyliertes Trimethylolpropantriacrylat, Pentaerythrittriacrylat und Mischungen der genannten trifunktionellen Reaktivverdünner, wobei Trimethylolpropantriacrylat bevorzugt ist.

Bevorzugt enthält das erfindungsgemäß eingesetzte Beschichtungsmittel als Reaktiwerdünner eine Mischung aus einem oder mehreren tetrafunktionellen Reaktivverdünnern (C1) und einem oder mehreren difunktionellen Reaktivverdünnern (C2), insbesondere eine Mischung aus Pentaerythritoltetraacrylat und Hexandioldiacrylat.

Ganz besonders bevorzugt werden in dem erfindungsgemäßen Verfahren Beschichtungsmittel eingesetzt, die als Komponente (A1) mindestens ein aliphatisches Urethanacrylat (A1) auf Basis des Isocyanurates von Hexamethylendiisocyanat und als Reaktiwerdünner (C) eine Mischung aus (C1) Pentaerythrittetraacrylat und (C2) Hexandioldiacrylat enthalten.

### Das ggf. verwendete Lösemittel (LM)

Die im erfindungsgemäßen Verfahren eingesetzten Beschichtungsmittel können ggf. noch Lösemittel enthalten. Die Lösemittel sind jedoch so zu wählen, dass sie sich in der eingesetzten Mischung der Lösemittel oder wenn diese unvermischt eingesetzt werden, sie selbst sich gegenüber dem Polycarbonatsubstrat weitestgehend optisch inert verhalten und dieses vorzugsweise hinsichtlich seiner Transparenz nicht beeinträchtigen. In diesem Sinne bedeutet "inert", dass für das Auge keine erkennbare Trübung vorhanden ist. Der Begriff "inert" schließt jedoch nicht aus, dass die Lösemittel das Polycarbonatsubstrat gezielt anquellen dürfen, was zu einer Verbesserung der Haftung beitragen kann. Eine weitere Aufgabe der Lösemittel besteht neben der Viskositätsherabsetzung der Beschichtungsmittel darin, einen möglichst gleichmäßigen Verlauf der Beschichtungsmittelzusammensetzung auf dem Substrat zu erlauben.

Als Lösemittel sind insbesondere Ethanol, Isopropanol, n-Butanol, Ethylacetat, Butylacetat, Solventnaphta, Methylethylketon, 1-Methoxypropylacetat-2, Aceton oder Tetrahydrofuran geeignet, wobei insbesondere Kombinationen verschiedener Lösemittel bevorzugt sind. Besonders bevorzugt werden Kombinationen der Lösemittel Ethanol, Isopropanol, n-Butanol, Ethylacetat, Butylacetat, Methylethylketon und 1-Methoxypropylacetat-2 eingesetzt.

**Weitere Bestandteile des erfindungsgemäß eingesetzten Beschichtungsmittels**

Die im erfindungsgemäßen Verfahren eingesetzten Beschichtungsmittel können vorteilhafterweise Photoinitiatoren (PI) enthalten.

Als Photoinitiatoren sind insbesondere solche aus der Gruppe bestehend aus alpha-Hydroxyketonen, alpha-Aminoketonen, Phenylglyoxylaten, Benzyldimethylketalen, Monoacylphosphinen, Bisacylphosphinen, Phosphinoxiden, Metallocenen und lodoniumsalzen geeignet. Bevorzugte Beispiele sind unter anderem 1-Hydroxy-cyclohexylphenylketon (Irgacure® 184), 2-Hydroxy-2-methyl-1-phenyl-1-propanon (Irgacure® 1173) 2-Hydroxy-1-{4-[4-(2-hydroxy-2-methyl-propionyl)-benzyl]-phenyl}-2-methyl-propan-1-on (Irgacure® 127), 2-Hydroxy-1-[4-(2-hydroxyethoxy) phenyl]-2-methyl-1-propanon (Irgacure 2959), Methylbenzoylformal (Darocure® MBF) Phosphinoxid, Phenylbis(2,4,6-trimethylbenzoyl) (Irgacure® 819) und Diphenyl-(2,4,6-trimethylbenzoylphosphinoxid (Lucirin® TPO).

Um einen besonders guten Verlauf der Beschichtung zu gewährleisten und somit besonders glatte Oberflächen zu erhalten, können dem erfindungsgemäß einsetzbaren Beschichtungsmittel handelsübliche Verlaufmittel wie beispielsweise Byk® 333, BYK® 310 zugegeben werden. Durch derartige Zusätze wird die Oberflächenspannung des UV-Lackes gesenkt, so dass eine gute Benetzung des Substrates unter entsprechenden Applikationsbedingungen gewährleistet ist. Vorteilhafterweise enthalten die Beschichtungsmittel Verlaufsmittel, die eine oder mehrere ethylenische Doppelbindungen enthalten, welche während des Aushärtungsprozesses mit den ethylenischen Doppelbindungen des Bindemittels reagieren können. Als Beispiel für ein solches bevorzugt eingesetztes Verlaufsmittel sei Byk UV 3570 genannt.

Bei Bedarf können auch Haftvermittler eingesetzt werden, die die dauerhafte Zwischenhaftung zum Untergrund (z.B. Polycarbonat) und/oder Primer gewährleisten. Beispiele dieser Additivklasse sind chlorierte Polyolefine, saure Polyester oder Phosphorsäureaddukte. Gegebenfalls ist auch der Einsatz von Entlüftern notwendig, um Kocher auf der Lackoberfläche zu vermeiden. Hierfür eignen sich handelsübliche Entlüfter wie z.B. Byk-A 500, Byk-A 50, Byk-A 515, BYK 390, BYK 306, BYK 315 und BYK 356.

Neben den oben genannten Bestandteilen können die im erfindungsgemäßen Verfahren eingesetzten Beschichtungsmittel noch weitere klarlacktypische Additive, wie beispielsweise Netzmittel, enthalten.

Bei Bedarf können die erfindungsgemäß eingesetzten Beschichtungsmittel als weitere klarlacktypische Additive noch ein oder mehrere Lichtschutzmittel enthalten. Geeignet sind die üblicherweise eingesetzten Lichtschutzmittel, insbesondere auf Basis von UV-Absorbern und/oder sterisch gehinderten Aminen (HALS). Bevorzugt enthalten die erfindungsgemäß eingesetzten Beschichtungsmittel weniger als 6 Gew.-%, insbesondere weniger als 0,1 Gew.-%, jeweils bezogen auf das Gesamtgewicht der Komponenten (A1), (A2), (A3), (B), (C1), (C2) und (C3), Lichtschutzmittel. Ganz besonders bevorzugt enthalten sie gar kein Lichtschutzmittel.

Die Komponenten (A), (B), (PI) sowie die klarlacktypischen Additive können dem im erfindungsgemäßen Verfahren eingesetzten Beschichtungsmittel in gelöster oder dispergierter Form zugegeben werden. Die hierfür verwendeten Lösungsmittel und/oder Reaktivverdünner dieser Komponenten sind, was das komplette Beschichtungsmittel angeht, dem Reaktiwerdünner (C) bzw. dem Lösemittel zuzuordnen. Das heißt Bestandteil (C) umfasst auch die Reaktiwerdünner, die über die anderen Komponenten ins Beschichtungsmittel gelangen.

Vorzugsweise enthalten die erfindungsgemäß eingesetzten Beschichtungsmittel
(i) 30 bis 60 Gew.-%, bevorzugt mehr als 40 bis 50 Gew.-%, bezogen auf das Gesamtgewicht der Komponenten (A1), (A2), (A3), (B), (C1), (C2) und (C3), der Nanopartikel (B),
(ii) 15 bis 40 Gew.-%, bevorzugt 20 bis 30 Gew.-%, bezogen auf das Gesamtgewicht der filmbildenden Komponenten (A1), (A2), (A3), (C1), (C2) und (C3), eines oder mehrerer Urethan(meth)-acrylate (A1) mit im Mittel 3 bis 5 Acrylat- und/oder Methacrylatgruppen pro Molekül
(iii) 0 bis weniger als 10 Gew.-%, bevorzugt 0 bis 5 Gew.-%, bezogen auf das Gesamtgewicht der filmbildenden Komponenten (A1), (A2), (A3), (C1), (C2) und (C3), eines oder mehrerer Urethan(meth)acrylate (A2) mit im Mittel mehr als 5 Acrylat- und/oder Methacrylatgruppen pro Molekül
(iv) 0 bis weniger als 10 Gew.-%, bevorzugt 0 bis 5 Gew.-%, bezogen auf das Gesamtgewicht der filmbildenden Komponenten (A1), (A2), (A3), (C1), (C2) und (C3), eines oder mehrerer Urethan(meth)acrylate (A3) mit im Mittel weniger als 3 Acrylat- und/oder Methacrylatgruppen pro Molekül
(v) 55 bis 80 Gew.-%, bevorzugt 65 bis 77 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C1) mit 4 Acrylat- und/oder Methacrylatgruppen pro Molekül,
(vi) 0 bis 15 Gew.-%, bevorzugt 3 bis 10 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3)verschiedene, monomere und/oder oligomere Verbindungen (C2) mit 2 Acrylat- und/oder Methacrylatgruppen pro Molekül und
(vii) 0 bis 15 Gew.-%, bevorzugt 0 bis 10 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C3) mit 3 Acrylat- und/oder Methacrylatgruppen pro Molekül,
wobei die Summe der Gewichtsanteile der filmbildenden Komponenten (A1), (A2), (A3), (C1), (C2) und (C3) jeweils 100 Gew.-% beträgt.

Wenn Lösemittel vorhanden sind, können diese in einer Menge von bis zu 80 Gew.-% bezogen auf das gesamte Beschichtungsmittel, enthalten sein.

Schließlich enthält das Beschichtungsmittel vorzugsweise

0 bis 10, besonders bevorzugt 1 bis 6 und ganz besonders bevorzugt 2 bis 4 Gew.-% eines oder mehrerer Photoinitiatoren (PI), wobei die Mengenangaben bezogen sind auf das Gesamtgewicht des Bindemittels (A) plus dem Gewicht eingesetzten Reaktiwerdünners (C), und

0 bis 15, besonders bevorzugt 0,5 bis 10 und ganz besonders bevorzugt 0,5 bis 5 Gew.-% weiterer klarlacktypischer Additive, wobei die Mengenangaben jeweils bezogen sind auf das Gesamtgewicht des Beschichtungsmittels.

### Kunststoffsubstrat

Als Polycarbonat oder Polycarbonatsubstrat werden in der vorliegenden Erfindung sowohl Homopolycarbonate als auch Copolycarbonate verstanden. Die Polycarbonate können in bekannter Weise linear oder verzweigt sein. Auch kann ein Teil der Carbonatgruppen der Homo- oder Copolycarbonate durch Dicarbonsäureestergruppen oder andere polycarbonatverträgliche Gruppen ersetzt sein. Bevorzugt unter den Dicarbonsäureestergruppen sind aromatische Dicarbonsäureestergruppen. Enthalten die Polycarbonate neben Kohlensäureresten Dicarbonsäurereste, so spricht man auch von Polyestercarbonaten, die wie oben dargelegt ebenfalls unter den Begriff der Polycarbonate fallen. Sind Dicarbonsäureestergruppen enthalten, so können diese in einem Anteil von bis zu 80 Mol-%, vorzugsweise 20 bis 50 Mol-% vorliegen.

Polycarbonate können nach allen aus der Literatur bekannten Verfahren hergestellt werden. Geeignete Verfahren zur Herstellung von Polycarbonaten sind beispielsweise die Herstellung aus Bisphenolen mit Phosgen nach dem Phasengrenzflächenverfahren oder dem Verfahren aus homogener Phase (Pyridin-Verfahren) oder aus Bisphenolen mit Kohlensäureestern nach dem Schmelzeumesterungsverfahren. Diese Herstellverfahren sind beispielsweise beschrieben in H. Schnell, "Chemistry and Physics of Polycarbonates", Polymer Reviews, Band 9, S. 31 bis 76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P. R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299. Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in den DE 10 31 512 A, US 3 022 272, US 5 340 905 und US 5 399 659. Die nach den oben beschriebenen Verfahren hergestellten Polycarbonate besitzen ein gewichtsmittleres Molekulargewicht Mw von vorzugsweise 12000 bis 400000 g/mol, insbesondere von 18000 bis 80000 g/mol und ganz besonders bevorzugt von 22000 bis 60000 g/mol.

Die Kunststoffsubstrate können auch aus Polymethylmethacrylat (PMMA) bestehen.

Besonders bevorzugt sind transparente Polycarbonate beziehungsweise Polycarbonatsubstrate, bevorzugt mit einer Transmission >80% des sichtbaren Lichts.

Die Kunststoffsubstrate können in beliebiger räumlicher Form vorliegen. Insbesondere eignet sich das erfindungsgemäße Verfahren zur Beschichtung von Gehäusen von elektronischen Bauteilen, wie beispielsweise von Handyschalen, Smartphones, iPhones, elektronischen Organizern, MP3-Spielern, iPods, Laptops, Computern, Digitalkameras, Videokameras, Spielkonsolen, Gameboys u.ä..

### Applikation und Härtung des Beschichtungsmittels sowie beschichtete Kunststoffsubstrate

Der Auftrag auf das Substrat erfolgt durch Standard-Beschichtungsverfahren wie z.B. Tauchen, Fluten, Spritzen, Streichen, Rakeln, Walzen, Sprühen, Fallfilmauftrag, Spincoating oder Schleudern. Besonders vorteilhaft ist das Aufbringen der Beschichtungsmittel in einem Tauch- oder Flutprozess sowie per Spritzapplikation mit niedriger Schichtdicke und gutem Verlauf.

Das Kunststoffsubstrat kann hierzu vor der Applikation des Beschichtungsmittels mit einem Primer vorbehandelt werden. Als Primer eignen sich beispielsweise Zusammensetzungen wie sie im erfindungsgemäßen Verfahren verwendet werden, die jedoch keine Nanopartikel (B) enthalten. Vorzugsweise erfolgt das erfindungsgemäße Verfahren ohne Primerbehandlung des Substrats. Besonders bevorzugt erfolgt das erfindungsgemäße Verfahren im Einschichtverfahren, das heißt durch Aufbringen von nur einer Schicht des Beschichtungsmittels direkt auf das nicht chemisch vorbehandelte Kunststoffsubstrat.

Nach dem Aufbringen, gegebenenfalls Abtropfen und anschließendem Ablüften der Beschichtung in der dem Fachmann bekannten Weise, erfolgt die Härtung der Beschichtung. Die Härtung kann durch Einwirkung energiereicher Strahlung, beispielsweise UV-Strahlung oder Elektronenstrahlung erfolgen. Als Strahlenquellen werden bevorzugt Quecksilber-Niederdruckstrahler, Mitteldruckstrahler, Hochdruckstrahler sowie Leuchtstoffröhren, Impulsstrahler oder Eximerstrahler verwendet, die vorzugsweise Licht in einem Wellenlängenbereich zwischen λ = 200 bis 700 nm, besonders bevorzugt von λ = 200 bis 500 nm und ganz besonders bevorzugt λ = 200 bis 400 nm emittieren. Weiterhin sind Strahlersysteme zu bevorzugen, die durch Modifikation des Reflektors eine geringe Wärmebelastung des Substrats erzielen. Solche Strahlersysteme sind als URS- Reflektorsysteme der Fa. IST Metz GmbH bekannt. Die üblicherweise für die UV-Härtung ausreichende Strahlendosis liegt zwischen 100 bis 6000 mJ/cm², besonders bevorzugt 1000 bis 4000 mJ/cm² und ganz besonders bevorzugt bei 2000 bis 3000 mJ/cm². Abhängig vom Abstand zwischen Substrat und UV-Lampe, Strahlerleistung und Reflektorsystem finden UV-Bestrahlungsstärken zwischen 100 bis 6000 mW/cm², bevorzugt 1000 bis 4000 mW/cm² und ganz besonders bevorzugt 2000 bis 3000 mW/cm² Anwendung.

Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Gew.-%). Die Atmosphäre kann im Grunde auch sauerstofffrei sein, d.h. es handelt sich um ein Inertgas. Als Inertgase eignen sich Kohlendioxid, Stickstoff, Edelgase oder Verbrennungsgase. Bevorzugter Bereich einer UV-Härtung in sauerstoffabgereicherter Atmosphäre ist zwischen 0,1 bis 5 Gew.-% Restsauerstoff. Ebenso kann die Bestrahlung der Beschichtungsmasse unter transparenten Medien wie Kunststofffolien, Glas oder Flüssigkeiten erfolgen. Die Bestrahlung unter einer sauerstoffabgereicherten Atmosphäre wirkt sich insbesondere auf die spätere Härte und Chemikalienbeständigkeit der gehärteten Beschichtung günstig aus.

Nach der Härtung sind Beschichtung und Substrat transparent. Die auf dem Substrat erhaltene Beschichtung weist nach der Härtung und vor Belastung einen Haze-Wert kleiner als 1, bevorzugt kleiner als 0,8, jeweils bestimmt mit Hilfe des BYK-Gardner Gerätes Haze-gard plus C4725, auf.

Nach einer Kratzbelastung, gemessen mit dem Taber-Test in Anlehnung an ASTM 1044-05 und ASTM 1003-00, weist die belastete Beschichtung einen Haze-Wert von ≤15 %, vorzugsweise ≤10%, besonders bevorzugt ≤8% auf, jeweils bestimmt mit Hilfe des BYK-Gardner Gerätes Haze-gard plus C4725.

Weiterer Gegenstand der Erfindung sind beschichtete Kunststoffsubstrate, insbesondere Gehäuse von elektronischen Geräten, die erhältlich sind durch das erfindungsgemäße Verfahren. Hierbei kann es sich beispielsweise um Handyschalen, Smartphones, iPhones, elektronische Organizer, MP3-Spieler, iPods, Laptops, Computer, Digitalkameras, Videokameras, Spielkonsolen, Gameboys u.ä. handeln.

Im Folgenden wird die Erfindung anhand von Beispielen näher erläutert.

### Beispiel 1

### Herstellung einer erfindungsgemäßen Beschichtung B1

In einem braunen Standglas werden 5,0 g n-Butanol, 16,81 g Isopropanol, 8,2 g Ethanol gemischt. Anschließend werden 1,4 g Irgacure® 184 (handelsüblicher Photoinitiator der Firma Ciba Speciality Chemicals; 1-Hydroxy-cyclohexyl-phenyl-keton) unter Rühren zugegeben. Ebenfalls unter Rühren werden 8,5 g Desmolux® VP LS 2308 (ungesättigtes, aliphatisches, im Wesentlichen isocyanatgruppenfreies Polyurethanacrylat auf Basis des Isocyanurates von Hexamethylendiisocyanat und Hydroxyethylacrylat mit einem Hydroxylgehalt von ca. 0,5 % gemäß DIN 53 240/2 und einem mittleren Gehalt von 3 bis 4 Acrylatgruppen pro Molekül der Firma Bayer Material Science AG, ca. 80% ig in Hexandioldiacrylat (HDDA), Dichte 1.11g/cm3), 19,7 g SR 295 (Pentaerythritoltetraacrylat der Firma Sartomer), 0,4 g Byk UV 3570 (handelsübliches Verlaufsadditiv der Firma Byk-Chemie GmbH, Lösung eines polyestermodifizierten acrylfunktionellen Polydimethylsiloxans) und 40,0 g Nanopol® C 784 (handelsübliches SiO2, durchschnittlicher Teilchendurchmesser von 20 nm, 50%ig in Butylacetat, erhältlich von Nano Resins AG) zugegeben. Nach 15 min wird die Zusammensetzung mit einem 36 µm-Stabrakel auf eine Polycarbonat-Tafel appliziert. Diese wird für 5 min bei 80 °C zum Ablüften in den Ofen gelegt und anschließend mit UV-Licht an einer IST-Lignocure-Anlage, ausgestattet mit zwei UV-Lampen (Quecksilber-Lampen), die beide auf 100%ige Leistung gestellt werden, gehärtet. Die beschichtete Polycarbonat-Tafel wird mit einer Dosis von 2500 bis 3000 mJ/cm2 gehärtet.

### Weitere Applikationsarten

Bei der Tauchapplikation wird vorzugsweise ein Festkörpergehalt von 50 Gew.-% eingestellt. Als Lösemittelkombination wird vorzugsweise eine Mischung aus n-Butanol, Ethanol, Ethylacetat, Isopropanol und Solventnaphta eingesetzt. Nach einer Eintauchzeit von beispielsweise 5 Sekunden, einer Abtropfzeit von etwa 1 Minute und einer Ablüftzeit bei etwa 80 °C von ungefähr 5 Minuten, wird mittels einer IST Lignocure-Anlage (Dosis 1,8 J/cm², Intensität 0,3 W/cm²) die Härtung zu Beschichtungen einer Schichtdicke von 9 bis 14 µm durchgeführt.

Bei der Applikation durch Fluten wird vorzugsweise ein Festkörpergehalt von 50 Gew.-% eingestellt. Als Lösemittelkombination wird vorzugsweise eine Mischung aus n-Butanol, Ethanol, Ethylacetat, Isopropanol und Solventnaphta eingesetzt. Nach einer Abtropfzeit von etwa 1 Minute und einer Ablüftzeit bei etwa 80 °C von ungefähr 5 Minuten, wird mittels einer IST Lignocure-Anlage (Dosis 1,8 J/cm², Intensität 0,3 W/cm²) die Härtung zu Beschichtungen einer Schichtdicke von 9 bis 12 µm durchgeführt.

Bei der Applikation durch Spritzen (Düse: 1,3 mm, Luftdruck 4 bar, Spritzabstand 20 cm) wird vorzugsweise ein Festkörpergehalt von 40 Gew.-% eingestellt. Als Lösemittelkombination wird vorzugsweise eine Mischung aus Ethylacetat, Butylacetat und Isopropanol eingesetzt. Nach einer Ablüftzeit bei etwa 80 °C von ungefähr 5 Minuten, wird mittels einer IST Lignocure-Anlage (Dosis 3,9 J/cm², Intensität 1,4 W/cm²) die Härtung zu Beschichtungen einer Schichtdicke von etwa 7 µm durchgeführt.

### Messung der Trübung:

Die Transparenz wird gemäß der Prüfnorm ASTM D1003 gemessen.

Der Ausgangs-Haze-Wert vor Belastung ist in Tabelle 1 dargestellt.

### Test der Haftung:

Zur Überprüfung der Haftung werden an der Beschichtung des Beispiels 1 folgende Tests vollzogen:

Haftungstest mittels Klebebandabriss (ASTM D 3359 und ISO 2409),

Kochtest: Ein mit VE-Wasser gefülltes Bad wird zum Kochen gebracht. Die präparierten Substrate werden dann in das kochende Wasser für 4 Stunden getaucht. Nach 4 Stunden werden sie aus dem Wasser genommen und kurz zum Kühlen abgelegt. Danach wird ein Gitterschnitt geritzt und die Haftung mit Tesa-Abriss getestet. Wurde die Haftung bestanden (d.h. GT < 2), kann der Lack in den Wasserlagerungstest (Wasserlagerung gemäß ASTM 870-02 und ISO 2812-2).

### Test der Abrasionsbeständigkeit

Die Abrasionsbeständigkeit der Oberflächen wurde mit Hilfe des Taber-Tests untersucht. Der Taber-Test und die anschließender Haze Messung wurde in Anlehnung an ASTM D 1044-05 und ASTM D 1003-00 durchgeführt, wobei die Proben vor der Messung nicht im Normklima bei 23°C und 50% relativer Luftfeuchte gelagert wurden. Es wurde der Haze nach Taber nach 100, 300 und 1000 Umdrehung getestet. Die Werte sind in Tabelle 1 dargestellt.

**Tabelle 1: Prüfergebnisse der Beschichtung des Beispiels 1**

| Ausgangs-Haze [%] | Δ Haze [%] nach 100 U | Δ Haze [%] nach 300 U | Δ Haze [%] nach 1000 U | Haftung GT | Kochtest GT |
|---|---|---|---|---|---|
| 0,57 | 2,45 | 3,49 | 4,24 | 0 | 0 |

### Impact-Test

Die Prüfung der Widerstandsfähigkeit der Beschichtungszusammensetzung bei schlagartiger Verformung (Schlagprüfung) wurde in Anlehnung an die Norm DIN EN ISO 6272-1 DE geprüft. Die Prüfung erfolgt durch ein fallendes Gewichtstück (300 g; Dorn 3/16) aus einer bestimmten Höhe (15 cm, 25 cm, 50 cm). Die Beschädigung wurde visuell beurteilt:

Ausgehend vom Einschlagpunkt sind konzentrische Risse im Lack erkennbar, die mit steigender Fallhöhe zu nehmen und sich weiter ausdehnen. In allen drei Fällen weist das Substrat selbst keine Schädigung auf und eine Ablösung der Beschichtung ist nicht feststellbar, d.h. die Haftung zwischen Substrat und Lack ist weiterhin gewährleistet.

## Patentansprüche

1. Verfahren zur Beschichtung von Kunststoffsubstraten, bei dem ein transparentes Beschichtungsmittel umfassend mindestens ein strahlenhärtbares Urethan(meth)acrylat (A), Nanopartikel (B), Reaktiwerdünner (C) und ggf. Lösemittel, auf das Kunststoffsubstrat appliziert wird,
**dadurch gekennzeichnet, dass** das Beschichtungsmittel
(i) 30 bis 60 Gew.-%, bezogen auf das Gesamtgewicht der Komponenten (A1), (A2), (A3), (B), (C1), (C2) und (C3), der Nanopartikel (B),
(ii) 15 bis 40 Gew.-%, bezogen auf das Gesamtgewicht der filmbildenden Komponenten (A1), (A2), (A3), (C1), (C2) und (C3), eines oder mehrerer Urethan(meth)acrylate (A1) mit im Mittel 3 bis 5 Acrylat- und/oder Methacrylatgruppen pro Molekül,
(iii) 0 bis weniger als 10 Gew.-%, bezogen auf das Gesamtgewicht der filmbildenden Komponenten (A1), (A2), (A3), (C1), (C2) und (C3), eines oder mehrerer Urethan(meth)-acrylate (A2) mit im Mittel mehr als 5 Acrylat- und/oder Methacrylatgruppen pro Molekül,
(iv) 0 bis weniger als 10 Gew.-%, bezogen auf das Gesamtgewicht der filmbildenden Komponenten (A1), (A2), (A3), (C1), (C2) und (C3), eines oder mehrerer Urethan(meth)-acrylate (A3) mit im Mittel weniger als 3 Acrylat- und/oder Methacrylatgruppen pro Molekül,
(v) 55 bis 80 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C1) mit 4 Acrylat- und/oder Methacrylatgruppen pro Molekül,
(vi) 0 bis 15 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C2) mit 2 Acrylat- und/oder Methacrylatgruppen pro Molekül und
(vii) 0 bis 15 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C3) mit 3 Acrylat- und/oder Methacrylatgruppen pro Molekül
enthält, wobei die Summe der Gewichtsanteile der filmbildenden Komponenten (A1), (A2), (A3), (C1), (C2) und (C3) jeweils 100 Gew.% beträgt.

2. Verfahren nach Anspruch 1, **dadurch gekennzeichnet, dass** das Beschichtungsmittel auf Polycarbonat, auf Blends von Polycarbonat mit anderen Kunststoffen und/oder auf Polymethylmethacrylat (PMMA) appliziert wird.

3. Verfahren nach Anspruch 1 oder 2, **dadurch gekennzeichnet, dass** das Beschichtungsmittel auf Gehäuse von elektronischen Geräten appliziert wird.

4. Verfahren nach einem der Ansprüche 1 bis 3, **dadurch gekennzeichnet, dass** das Beschichtungsmittel
(i) mehr als 40 bis 50 Gew.-%, bezogen auf das Gesamtgewicht der Komponenten (A1), (A2), (A3), (B), (C1), (C2) und (C3), der Nanopartikel (B),
(ii) 20 bis 30 Gew.-%, bezogen auf das Gesamtgewicht der filmbildenden Komponenten (A1), (A2), (A3), (C1), (C2) und (C3), eines oder mehrerer Urethan(meth)acrylate (A1) mit im Mittel 3 bis 5 Acrylat- und/oder Methacrylatgruppen pro Molekül,
(iii) 0 bis 5 Gew.-%, bezogen auf das Gesamtgewicht der filmbildenden Komponenten (A1), (A2), (A3), (C1), (C2) und (C3), eines oder mehrerer Urethan(meth)acrylate (A2) mit im Mittel mehr als 5 Acrylat- und/oder Methacrylatgruppen pro Molekül,
(iv) 0 bis 5 Gew.-%, bezogen auf das Gesamtgewicht der filmbildenden Komponenten (A1), (A2), (A3), (C1), (C2) und (C3), eines oder mehrerer Urethan(meth)acrylate (A3) mit im Mittel weniger als 3 Acrylat- und/oder Methacrylatgruppen pro Molekül,
(v) 65 bis 77 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C1) mit 4 Acrylat- und/oder Methacrylatgruppen pro Molekül,
(vi) 3 bis 10 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C2) mit 2 Acrylat- und/oder Methacrylatgruppen pro Molekül und
(vii) 0 bis 10 Gew.-%, bezogen auf das Gesamtgewicht der filmbildenden Komponenten (A1), (A2), (A3), (C1), (C2) und (C3), einer oder mehrerer, von den Komponenten (A1), (A2) und (A3) verschiedene, monomere und/oder oligomere Verbindungen (C3) mit 3 Acrylat- und/oder Methacrylatgruppen pro Molekül
enthält, wobei die Summe der Gewichtsanteile der filmbildenden Komponenten (A1), (A2), (A3), (C1), (C2) und (C3) jeweils 100 Gew.-% beträgt.

5. Verfahren nach einem der Ansprüche 1 bis 4, **dadurch gekennzeichnet, dass** das Beschichtungsmittel weniger als 6 Gew.-%, bezogen auf das Gesamtgewicht der Komponenten (A1), (A2), (A3), (B), (C1), (C2) und (C3), Lichtschutzmittel enthält.

6. Verfahren nach einem der Ansprüche 1 bis 5, **dadurch gekennzeichnet, dass** das Beschichtungsmittel als Komponente (C1) Pentaerythrittetraacrylat und/oder Ditrimethylolpropantetraacrylat enthält.

7. Verfahren nach einem der Ansprüche 1 bis 6, **dadurch gekennzeichnet, dass** das Beschichtungsmittel als Komponente (C2) Hexandioldiacrylat enthält.

8. Verfahren nach einem der Ansprüche 1 bis 7, **dadurch gekennzeichnet, dass** das Beschichtungsmittel als Komponente (A1) ein oder mehrere Urethan(meth)acrylate (A1) mit im Mittel 3 bis 4 Acrylat- und/oder Methacrylatgruppen pro Molekül enthält.

9. Verfahren nach einem der Ansprüche 1 bis 8, **dadurch gekennzeichnet, dass** das Beschichtungsmittel als Komponente (A1) ein oder mehrere aliphatische Urethanacrylate (A1) enthält.

10. Verfahren nach einem der Ansprüche 1 bis 9, **dadurch gekennzeichnet, dass** das Beschichtungsmittel als Komponente (A1) ein oder mehrere aliphatische Urethanacrylate (A1) auf Basis des Isocyanurates von Hexamethylendiisocyanat enthält.

11. Verfahren nach einem der Ansprüche 1 bis 10, **dadurch gekennzeichnet, dass** das Beschichtungsmittel als Komponente (A1) ein oder mehrere aliphatische Urethanacrylate (A1) auf Basis des Isocyanurates von Hexamethylendiisocyanat und als Reaktivverdünner (C) eine Mischung aus (C1) Pentaerythrittetraacrylat und (C2) Hexandioldiacrylat enthält.

12. Verfahren nach einem der Ansprüche 1 bis 11, **dadurch gekennzeichnet, dass** das Beschichtungsmittel direkt auf das Kunststoffsubstrat appliziert wird.

13. Beschichtete Kunststoffsubstrate erhältlich durch ein Verfahren gemäß einem oder mehreren der Ansprüche 1 bis 12.

14. Beschichtete Kunststoffsubstrate nach Anspruch 13, **dadurch gekennzeichnet, dass** sie Gehäuse von elektronischen Geräten sind.

15. Beschichtete Gehäuse von elektronischen Geräten gemäß Anspruch 14, wobei es sich um Handyschalen, Smartphones, iPhones, elektronische Organizer, MP3-Spieler, iPods, Laptops, Computer, Digitalkameras, Videokameras, Spielkonsolen, Gameboys, handelt.

## Claims

1. Method of coating plastics substrates, by applying a transparent coating composition comprising at least one radiation-curable urethane (meth)acrylate (A), nanoparticles (B), reactive diluents (C), and, optionally, solvents to the plastics substrate,
**characterized in that** said coating composition comprises
(i) 30% to 60% by weight, based on the total weight of components (A1), (A2), (A3), (B), (C1), (C2), and (C3), of the nanoparticles (B),
(ii) 15% to 40% by weight, based on the total weight of film-forming components (A1), (A2), (A3), (C1), (C2), and (C3), of one or more urethane (meth)acrylates (A1) having on average 3 to 5 acrylate and/or methacrylate groups per molecule,
(iii) 0% to less than 10% by weight, based on the total weight of film-forming components (A1), (A2), (A3), (C1), (C2), and (C3), of one or more urethane (meth)acrylates (A2) having on average more than 5 acrylate and/or methacrylate groups per molecule,
(iv) 0% to less than 10% by weight, based on the total weight of film-forming components (A1), (A2), (A3), (C1), (C2), and (C3), of one or more urethane (meth)acrylates (A3) having on average less than 3 acrylate and/or methacrylate groups per molecule,
(v) 55% to 80% by weight, based on the total weight of film-forming components (A1), (A2), (A3), (C1), (C2), and (C3), of one or more monomeric and/or oligomeric compounds (C1), different from components (A1), (A2), and (A3), and having 4 acrylate and/or methacrylate groups per molecule,
(vi) 0% to 15% by weight, based on the total weight of film-forming components (A1), (A2), (A3), (C1), (C2), and (C3), of one or more monomeric and/or oligomeric compounds (C2), different from components (A1), (A2), and (A3), and having 2 acrylate and/or methacrylate groups per molecule, and
(vii) 0% to 15% by weight, based on the total weight of film-forming components (A1), (A2), (A3), (C1), (C2), and (C3), of one or more monomeric and/or oligomeric compounds (C3), different from components (A1), (A2), and (A3), and having 3 acrylate and/or methacrylate groups per molecule,
the sum of the weight fractions of film-forming components (A1), (A2), (A3), (C1), (C2), and (C3) being in each case 100% by weight.

2. Method according to Claim 1, **characterized in that** the coating composition is applied to polycarbonate, to blends of polycarbonate with other plastics and/or to polymethyl methacrylate (PMMA).

3. Method according to Claim 1 or 2, **characterized in that** the coating composition is applied to casings of electronic appliances.

4. Method according to any of Claims 1 to 3, **characterized in that** the coating composition comprises
(i) more than 40% to 50% by weight, based on the total weight of components (A1), (A2), (A3), (B), (C1), (C2), and (C3), of the nanoparticles (B),
(ii) 20% to 30% by weight, based on the total weight of film-forming components (A1), (A2), (A3), (C1), (C2), and (C3), of one or more urethane (meth)acrylates (A1) having on average 3 to 5 acrylate and/or methacrylate groups per molecule,
(iii) 0% to 5% by weight, based on the total weight of film-forming components (A1), (A2), (A3), (C1), (C2), and (C3), of one or more urethane (meth)acrylates (A2) having on average more than 5 acrylate and/or methacrylate groups per molecule,
(iv) 0% to 5% by weight, based on the total weight of film-forming components (A1), (A2), (A3), (C1), (C2), and (C3), of one or more urethane (meth)acrylates (A3) having on average less than 3 acrylate and/or methacrylate groups per molecule,
(v) 65% to 77% by weight, based on the total weight of film-forming components (A1), (A2), (A3), (C1), (C2), and (C3), of one or more monomeric and/or oligomeric compounds (C1), different from components (A1), (A2), and (A3), and having 4 acrylate and/or methacrylate groups per molecule,
(vi) 3% to 10% by weight, based on the total weight of film-forming components (A1), (A2), (A3), (C1), (C2), and (C3), of one or more monomeric and/or oligomeric compounds (C2), different from components (A1), (A2), and (A3), and having 2 acrylate and/or methacrylate groups per molecule, and
(vii) 0% to 10% by weight, based on the total weight of film-forming components (A1), (A2), (A3), (C1), (C2), and (C3), of one or more monomeric and/or oligomeric compounds (C3), different from components (A1), (A2), and (A3), and having 3 acrylate and/or methacrylate groups per molecule,
the sum of the weight fractions of film-forming components (A1), (A2), (A3), (C1), (C2), and (C3) being in each case 100% by weight.

5. Method according to any of Claims 1 to 4, **characterized in that** the coating composition comprises less than 6% by weight, based on the total weight of components (A1), (A2), (A3), (B), (C1), (C2), and (C3), of light stabilizers.

6. Method according to any of Claims 1 to 5, **characterized in that** the coating composition comprises as component (C1) pentaerythrityl tetraacrylate and/or ditrimethylolpropane tetraacrylate.

7. Method according to any of Claims 1 to 6, **characterized in that** the coating composition comprises as component (C2) hexanediol diacrylate.

8. Method according to any of Claims 1 to 7, **characterized in that** the coating composition comprises as component (A1) one or more urethane (meth)acrylates (A1) having on average 3 to 4 acrylate and/or methacrylate groups per molecule.

9. Method according to any of Claims 1 to 8, **characterized in that** the coating composition comprises as component (A1) one or more aliphatic urethane acrylates (A1).

10. Method according to any of Claims 1 to 9, **characterized in that** the coating composition comprises as component (A1) one or more aliphatic urethane acrylates (A1) based on the isocyanurate of hexamethylene diisocyanate.

11. Method according to any of Claims 1 to 10, **characterized in that** the coating composition comprises as component (A1) one or more aliphatic urethane acrylates (A1) based on the isocyanurate of hexamethylene diisocyanate, and as reactive diluents (C) a mixture of (C1) pentaerythrityl tetraacrylate and (C2) hexanediol diacrylate.

12. Method according to any of Claims 1 to 11, **characterized in that** the coating composition is applied directly to the plastics substrate.

13. Coated plastics substrates obtainable by a method according to one or more of Claims 1 to 12.

14. Coated plastics substrates according to Claim 13, **characterized in that** they are electronic appliance casings.

15. Coated electronic appliance casings according to Claim 14, the appliance being one of cell phone shells, smartphones, iPhones, electronic organizers, MP3 players, iPods, laptops, computers, digital cameras, video cameras, games consoles, Gameboys.

## Revendications

1. Procédé pour le revêtement de substrats en matériau synthétique, dans lequel un agent de revêtement transparent, comprenant au moins un uréthane-(méth)acrylate durcissable par des rayons (A), des nanoparticules (B), du diluant réactif (C) et le cas échéant du solvant, est appliqué sur le substrat en matériau synthétique,
**caractérisé en ce que** l'agent de revêtement contient
(i) 30 à 60% en poids, par rapport au poids total des composants (A1), (A2), (A3), (B), (C1), (C2) et (C3), de nanoparticules (B),
(ii) 15 à 40% en poids, par rapport au poids total des composants filmogènes (A1), (A2), (A3), (C1), (C2) et (C3), d'un ou de plusieurs uréthane-(méth)acrylates (A1) présentant en moyenne 3 à 5 groupes acrylate et/ou méthacrylate par molécule,
(iii) 0 à moins de 10% en poids, par rapport au poids total des composants filmogènes (A1), (A2), (A3), (C1), (C2) et (C3), d'un ou de plusieurs uréthane-(méth)acrylates (A2) présentant en moyenne plus de 5 groupes acrylate et/ou méthacrylate par molécule,
(iv) 0 à moins de 10% en poids, par rapport au poids total des composants filmogènes (A1), (A2), (A3), (C1), (C2) et (C3), d'un ou de plusieurs uréthane-(méth)acrylates (A3) présentant en moyenne moins de 3 groupes acrylate et/ou méthacrylate par molécule,
(v) 55 à 80% en poids, par rapport au poids total des composants filmogènes (A1), (A2), (A3), (C1), (C2) et (C3), d'un ou de plusieurs composés monomères et/ou oligomères (C1), différents des composants (A1), (A2) et (A3), présentant 4 groupes acrylate et/ou méthacrylate par molécule,
(vi) 0 à 15% en poids, par rapport au poids total des composants filmogènes (A1), (A2), (A3), (C1), (C2) et (C3), d'un ou de plusieurs composés monomères et/ou oligomères (C2), différents des composants (A1), (A2) et (A3), présentant 2 groupes acrylate et/ou méthacrylate par molécule,
(vii) 0 à 15% en poids, par rapport au poids total des composants filmogènes (A1), (A2), (A3), (C1), (C2) et (C3), d'un ou de plusieurs composés monomères et/ou oligomères (C3), différents des composants (A1), (A2) et (A3), présentant 3 groupes acrylate et/ou méthacrylate par molécule, la somme des proportions en poids des composants filmogènes (A1), (A2), (A3), (C1), (C2) et (C3) valant à chaque fois 100% en poids.

2. Procédé selon la revendication 1, **caractérisé en ce que** l'agent de revêtement est appliqué sur du polycarbonate, sur des mélanges de polycarbonate avec d'autres matériaux synthétiques et/ou sur du poly((méth)acrylate de méthyle) (PMMA).

3. Procédé selon la revendication 1 ou 2, **caractérisé en ce que** l'agent de revêtement est appliqué sur des boîtiers d'appareils électroniques.

4. Procédé selon l'une quelconque des revendications 1 à 3, **caractérisé en ce que** l'agent de revêtement contient
(i) plus de 40 à 50% en poids, par rapport au poids total des composants (A1), (A2), (A3), (B), (C1), (C2) et (C3), de nanoparticules (B),
(ii) 20 à 30% en poids, par rapport au poids total des composants filmogènes (A1), (A2), (A3), (C1), (C2) et (C3), d'un ou de plusieurs uréthane-(méth)acrylates (A1) présentant en moyenne 3 à 5 groupes acrylate et/ou méthacrylate par molécule,
(iii) 0 à 5% en poids, par rapport au poids total des composants filmogènes (A1), (A2), (A3), (C1), (C2) et (C3), d'un ou de plusieurs uréthane-(méth)acrylates (A2) présentant en moyenne plus de 5 groupes acrylate et/ou méthacrylate par molécule,
(iv) 0 à 5% en poids, par rapport au poids total des composants filmogènes (A1), (A2), (A3), (C1), (C2) et (C3), d'un ou de plusieurs uréthane-(méth)acrylates (A3) présentant en moyenne moins de 3 groupes acrylate et/ou méthacrylate par molécule,
(v) 65 à 77% en poids, par rapport au poids total des composants filmogènes (A1), (A2), (A3), (C1), (C2) et (C3), d'un ou de plusieurs composés monomères et/ou oligomères (C1), différents des composants (A1), (A2) et (A3), présentant 4 groupes acrylate et/ou méthacrylate par molécule,
(vi) 3 à 10% en poids, par rapport au poids total des composants filmogènes (A1), (A2), (A3), (C1), (C2) et (C3), d'un ou de plusieurs composés monomères et/ou oligomères (C2), différents des composants (A1), (A2) et (A3), présentant 2 groupes acrylate et/ou méthacrylate par molécule,
(vii) 0 à 10% en poids, par rapport au poids total des composants filmogènes (A1), (A2), (A3), (C1), (C2) et (C3), d'un ou de plusieurs composés monomères et/ou oligomères (C3), différents des composants (A1), (A2) et (A3), présentant 3 groupes acrylate et/ou méthacrylate par molécule, la somme des proportions en poids des composants filmogènes (A1), (A2), (A3), (C1), (C2) et (C3) valant à chaque fois 100% en poids.

5. Procédé selon l'une quelconque des revendications 1 à 4, **caractérisé en ce que** l'agent de revêtement contient moins de 6% en poids, par rapport au poids total des composants (A1), (A2), (A3), (B), (C1), (C2) et (C3), d'agent de protection contre la lumière.

6. Procédé selon l'une quelconque des revendications 1 à 5, **caractérisé en ce que** l'agent de revêtement contient, comme composant (C1), du tétraacrylate de pentaérythritol et/ou de tétraacrylate de ditriméthylolpropane.

7. Procédé selon l'une quelconque des revendications 1 à 6, **caractérisé en ce que** l'agent de revêtement contient, comme composant (C2), du diacrylate d'hexanediol.

8. Procédé selon l'une quelconque des revendications 1 à 7, **caractérisé en ce que** l'agent de revêtement contient, comme composant (A1), un ou plusieurs uréthane-(méth)acrylates (A1) présentant en moyenne 3 à 4 groupes acrylate et/ou méthacrylate par molécule.

9. Procédé selon l'une quelconque des revendications 1 à 8, **caractérisé en ce que** l'agent de revêtement contient, comme composant (A1), un ou plusieurs uréthane-acrylates aliphatiques (A1).

10. Procédé selon l'une quelconque des revendications 1 à 9, **caractérisé en ce que** l'agent de revêtement contient, comme composant (A1), un ou plusieurs uréthane-acrylates aliphatiques (A1) à base de l'isocyanurate de l'hexaméthylènediisocyanate.

11. Procédé selon l'une quelconque des revendications 1 à 10, **caractérisé en ce que** l'agent de revêtement contient, comme composant (A1), un ou plusieurs uréthane-acrylates aliphatiques (A1) à base de l'isocyanurate de l'hexaméthylènediisocyanate et comme diluant réactif (C) un mélange de (C1) tétraacrylate de pentaérythritol, et de (C2) diacrylate d'hexanediol.

12. Procédé selon l'une quelconque des revendications 1 à 11, **caractérisé en ce que** l'agent de revêtement est appliqué directement sur le substrat en matériau synthétique.

13. Substrats revêtus en matériau synthétique, pouvant être obtenus par un procédé selon l'une ou plusieurs des revendications 1 à 12.

14. Substrats revêtus en matériau synthétique selon la revendication 13, **caractérisés en ce qu'**il s'agit de boîtiers d'appareils électroniques.

15. Boîtier revêtu d'appareils électroniques selon la revendication 14, où il s'agit de coques de portable, de téléphones intelligents, d'i-Phones, d'organisateurs électroniques, de lecteurs MP3, d'i-Pods, d'ordinateurs portables, d'ordinateurs, de caméras numériques, de caméras vidéo, de consoles de jeux, de Gameboy.
